# EUROPÄISCHE PATENTSCHRIFT

(11) **EP 0 877 333 B1**
(45) Veröffentlichungstag und Bekanntmachung des Hinweises auf die Patenterteilung: **10.11.2004**
(21) Anmeldenummer: 98107287.9
(22) Anmeldetag: 22.04.1998
(51) Int. Cl.: G06K 7/00, G06K 19/07, G06K 7/08

(54) **Vorrichtung zur drahtlosen Energieübertragung und Ausführung einer Aktion**
Apparatus for wireless transfer of energy and execution of an action
Appareil pour le transfert d'énergie sans fil et exécution d'une action

(30) Priorität: 09.05.1997 DE 19719562
(43) Veröffentlichungstag der Anmeldung: 11.11.1998
(73) Patentinhaber: Stobbe, Anatoli, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- EP-A- 0 634 729
- DE-A- 4 003 410
- US-A- 4 688 036
- US-A- 4 829 296
- US-A- 5 300 875

## Beschreibung

Die Erfindung betrifft eine Vorrichtung zur drahtlosen Energieübertragung und Ausführung einer Aktion nach dem Oberbegriff des Anspruchs 1.

Vorrichtungen zur drahtlosen Energieübertragung sind als Kleingeräte im Haushalt und als Elektrowerkzeuge bereits bekannt. Hierbei wird über eine netzgespeiste Primärspule einer Ladestation eine Spannung in einer geräteeigenen Sekundärspule induziert, die zur Aufladung eines geräteeigenen Akkus dient. Zum Aufladen wird das Gerät in die Ladestation gestellt, so dass die Sekundärspule in induktive Koppelung mit der Primärspule gelangt und eine Energieübertragung stattfinden kann.

Eine drahtlose Energie- und darüber hinaus Datenübertragung ist auch von Transpondersystemen bekannt, wie sie z.B. in der DE-PS 40 03 410 C2 beschrieben sind. Hierbei ist eine Basisstation mit einem oder mehreren Transpondern koppelbar. Die Basisstation umfasst zumindest einen Hochfrequenzsender, der zugleich Energiesender und Datensender sein kann und der Transponder umfasst einen Hochfrequenzempfänger, der gleichzeitig Energieempfänger und Datenempfänger sein kann. Dabei kann der Transponder ohne eigene Energiequelle ausgestattet sein, da er die zum Betrieb seines elektronischen Schaltkreises nötige Energie von der Basisstation bezieht. Bisher ist es bei Transpondersystemen lediglich bekannt, einen Speicher des Transponders zu beschreiben oder auszulesen und irgendwelche Kommandos oder Programmbefehle am Schaltkreis auszuführen. In der Regel besitzen Transpondersysteme auch eine Datenübertragungsstrecke in umgekehrter Richtung mit einem Sender oder Modulator im Transponder und einem Empfänger in der Basisstation. Bei derartigen Systemen kann z.B. die Basisstation mit einem Aktor in Form eines Schlosses oder Öffners ausgestattet sein, der im Rahmen einer Zugangskontrollanlage betätigt wird, wenn ein mit einem Zugangsberechtigungskode ausgestatteter Transponder in das Feld der Basisstation eingeführt wird. Bekannte Basisstationen sind dabei stets mit einer eigenen Energiequelle ausgestattet, die in der Regel mit dem Stromnetz verbunden ist. Es gibt aber auch batteriegespeiste Systeme.

Darüber hinaus gibt es auch Fernsteuersysteme, die aus einem Sender und einem Empfänger bestehen, wobei die Empfangsvorrichtung mit einem Aktor gekoppelt ist. Bei derartigen Systemen findet nur eine Datenübertragung zur Empfangsvorrichtung statt. Dagegen erfolgt die Speisung der Empfangsvorrichtung, einer eventuell Auswerteelektronik und des Aktors von einer eigenen Batterie oder einem Akku.

Aus der EP-A-0 634 729 ist eine Datenaustauschanordnung mit einem tragbaren Datenträger 1 und einer festen Station 2 bekannt. Der Datenträger 1 ist für einen Datenaustausch mit der festen Station 2 als passiver Transponder ausgebildet, dass heißt, er bezieht seine Energie zur Übertragung von Daten von der festen Station 2. Hierzu müsste die feste Station 2 ständig ein elektromagnetisches Feld aussenden. Um Energie zu sparen, wird das elektromagnetische Feld der festen Station 2 jedoch nur zum Datenaustausch aktiviert. Zur Aktivierung dient ein zusätzlicher Empfänger in der festen Station 2, der im Ruhezustand weniger Energie verbraucht, als der Sender. Ein im tragbaren Datenträger befindlicher aktiver Oszillator wird mittels eines Tasters kurzzeitig eingeschaltet, worauf der Empfänger der festen Station 2 dessen Sender aktiviert. Anschließend erfolgt der Datenaustausch dann in konventioneller weise, in dem der Sender der festen Station 2 die Transponderelektronik mit Strom versorgt und diese das elektromagnetische Feld der festen Station 2 moduliert.

Aus der US-A-4 688 036, gegen die die Ansprüche abgegrenzt sind, ist ein schlüsselloses Zugangssystem für Fahrzeuge bekannt. Dieses umfasst einen vom Berechtigten zu tragenden aktiven Transponder und ein im Fahrzeug eingebautes Schreib-Lesegerät. Sowohl der Transponder als auch das Schreib-Lesegerät werden aus eigenen Energiequellen versorgt.

Ferner ist aus der US-A-4 829 296 ein elektronisches Schloss bekannt, bestehend aus einem Empfänger und einer Zugangsvorrichtung. Die Zugangsvorrichtung überträgt einen Zugangscode zum Empfänger und zusätzlich Energie zur Versorgung der Elektronik sowie eines Elektromagneten. Die Übertragung von Daten und Energie erfolgt nicht drahtlos über ein elektromagnetisches Feld sondern drahtgebunden über entsprechende Kontakte, die miteinander in Eingriff gebracht werden müssen.

Schließlich ist aus der US-A-5 300 875 ein aktiver Transponder bekannt, der eine eigene Energiequelle in Form einer Batterie besitzt. Zur Ladung der Batterie sind unterschiedliche Arten von Energiewandlern dargestellt, wie ein Seismikwandler, ein piezolektrischer Wandler, ein akustischer Wandler oder ein fotovoltaischer Wandler. Zusätzlich ist auch ein Wandler vorhanden, der die Energie zur Ladung der Batterie aus einem elektromagnetischen Feld bezieht.

Der Erfindung liegt die Aufgabe zugrunde, eine Vorrichtung zur drahtlosen Energieübertragung und Ausführung einer Aktion nach dem Oberbegriff des Anspruchs 1 dahingehend zu verbessern, dass die Empfangsvorrichtung vollständig ohne eigene Energiequelle auskommt.

Diese Aufgabe wird bei einer Vorrichtung nach dem Oberbegriff des Anspruchs 1 durch die im kennzeichnenden Teil angegebenen Merkmale gelöst.

Weiterbildungen und vorteilhafte Ausgestaltungen der Erfindung ergeben sich aus den Unteransprüchen sowie der weiteren Beschreibung.

Bei der erfindungsgemäßen Lösung wird auch die Energieversorgung eines eine mechanische Aktion ausführenden Aktors vom Sender übernommen. Dazu wird die Energie von der Sendevorrichtung zur Empfangsvorrichtung übertragen. Durch die Energieübertragung und damit durch den Verzicht auf eine eigene Energiequelle kann die Empfangsvorrichtung völlig wartungsfrei arbeiten. Eine Funktionsstörung durch Erschöpfung der Energiequelle kann nicht auftreten. Die Empfangsvorrichtung umfasst einen temporären Energiespeicher, der durch Energieübertragung von der Sendevorrichtung zur Empfangsvorrichtung aufladbar ist und die Energieversorgung des Aktors bei Verbrauchsspitzen übernimmt.

Dadurch ist sichergestellt, dass Aktoren verwendet werden können, die kurzzeitig eine höhere Leistung benötigen, als von der Sendevorrichtung zur Empfangsvorrichtung übertragen werden kann. Als Beispiel seien hier Elektromagnete oder Motore erwähnt.

Die Auslösung einer Aktion kann gesteuert werden und damit gezielt beeinflusst werden. Dadurch ist außer dem Ereignis der Energieübertragung selbst noch ein zusätzliches Steuerungskriterium gegeben, das eine erste Sicherheit gegen Manipulationsversuche oder ein ungewollte Auslösung darstellt.
So kann die Auslösung der Aktion ferngesteuert von der Sendevorrichtung erfolgen. Weiter kann die Auslösung der Aktion automatisch durch wenigstens einen Sensor der Empfangsvorrichtung erfolgen. Weitere Möglichkeiten bestehen darin, die Auslösung der Aktion nach Vergleich eines von der Sendevorrichtung übertragenen Kodes mit einem in der Empfangsvorrichtung gespeicherten Kode automatisch durch die Empfangsvorrichtung vorzunehmen. Darüber hinaus kann die Auslösung der Aktion nach Authentifikation von zwischen der Sendevorrichtung und der Empfangsvorrichtung ausgetauschten Daten erfolgen. All diese Varianten bewirken, dass außer dem Ereignis der Energieübertragung selbst noch ein oder mehrere zusätzliche Kriterien vor der Auslösung der Aktion geprüft werden, so dass eine erhöhte Sicherheit gegen Manipulationsversuche oder ein ungewollte Auslösung vorhanden sind.

Bei mehreren Aktoren kann auch noch die Auslösung der Aktion nach Auswahl und Ansteuerung der zugeordneten Aktoren erfolgen.

Der Sensor der Empfangsvorrichtung kann ein Frequenzdetektor und/oder ein Spannungswertdetektor für das von der Sendevorrichtung ausgestrahlte Energiesignal sein. Ferner kann der Sensor ein Zeitdetektor oder ein Detektor für eine externe physikalische Größe sein und mittels einer Steuereinheit den Aktor steuern.

Mittels der Sensoren besteht eine gezielte Steuerungsmöglichkeit des Aktors, die von dem Ereignis der reinen Energieübertragung unabhängig ist. So kann der Frequenzdetektor im einfachsten Fall ein selektiver Schwingkreis sein, der den Aktor nur dann auslöst, wenn das Energiesignal auf einer bestimmten Frequenz übertragen wird. Der Spannungswertdetektor kann auf die Höhe einer bestimmten Spannung eingestellt sein, sei es auf eine Spitzenspannung des von der Sendevorrichtung zur Empfangsvorrichtung übertragenen Signals oder auf eine Spannung, die beim Aufladen des temporären Energiespeichers auftritt.

Ferner kann auch eine interne Zeitbasis verwendet werden, um die Aktion erst dann auszulösen, wenn das Energiesignal eine vorbestimmte Zeit ansteht.

Detektoren für externe physikalische Größen ermöglichen weitere intelligente Anwendungsmöglichkeiten, beispielsweise die Steuerung einer Aktion in Abhängigkeit einer Temperatur, eines Druckes, eines Schallpegels, eines Helligkeitswertes, einer Beschleunigung oder ähnlicher Größen.

Die Empfangsvorrichtung kann eine Logik- oder Prozessorschaltung zur Auswertung des Sensorsignals oder der Sensorsignale umfassen.

Es lassen sich dann Aktionen in Abhängigkeit weiterer miteinander verknüpfter Kriterien steuern und dadurch die Möglichkeiten und die Sicherheit bei der Auslösung von Aktionen verbessern.

Ferner kann die Empfangsvorrichtung eine Logik- oder Prozessorschaltung zur Auswertung von Fernsteuersignalen der Sendervorrichtung umfassen.

Durch diese Maßnahme kann die Sicherheit gegen Manipulationen beim Auslösen ferngesteuerter Aktionen verbessert werden.

Die Empfangsvorrichtung kann einen Dekoder umfassen, welcher auf Anforderung der Steuereinheit der Empfangsvorrichtung von der Sendevorrichtung gesendete Autentifikationsdaten auswertet und bei Gültigkeit der Autentifikationsdaten den Sensor und/oder den Aktor freigibt.

Durch diese Maßnahme wird eine zusätzliche Sicherheitsprüfung in die Empfangsvorrichtung verlegt. Es ist dadurch möglich, die Steuerungsmöglichkeit von Empfangsvorrichtungen individuell einzuschränken. Das ist beispielsweise dann sinnvoll, wenn mehrere Empfangsvorrichtungen vorgesehen sind, und es unterschiedlich Berechtigte gibt. Berechtigte mit einem geringen Berechtigungsstatus können dann nur bestimmte Empfangsvorrichtungen fernsteuern, während Berechtigte mit einem höheren Berechtigtenstatus mehrere Empfangsvorrichtungen beeinflussen können.

Die Empfangsvorrichtung kann einen gesonderten Datensender und die Sendevorrichtung einen gesonderten Datenempfänger zur bidirektionalen Kommunikation umfassen. Sowohl in einem Speicher der Sendervorrichtung als auch in einem Speicher der Empfangsvorrichtung können Autentifikationsdaten abgelegt sein. Sowohl in der Sendevorrichtung als auch in der Empfangsvorrichtung können Dekoder vorgesehen sein, mittels der auf Anforderung gegenseitig übermittelte Autentifikationsdaten auf Gültigkeit überprüfbar sind und erst bei Gültigkeit beider Autentifikationsdaten der Sensor und/oder der Aktor freigebbar sind.

Die Manipulationssicherheit wird hierdurch nochmals gesteigert. Sollte der Versuch unternommen werden, die Autentifikationsdaten durch Abhören der Datenkommunikation zu identifizieren und so den Kode zu entschlüsseln, wird dies durch die bei der Datenkommunikation verwendeten unbekannten Schlüssel erheblich erschwert.

Weiterhin können Authentifikationsvorgänge in einem Speicher der Sendevorrichtung und/oder der Empfangsvorrichtung gespeichert werden.

Es werden so automatisch Protokolle aller Authentifikationsvorgänge erstellt die es ermöglichen, z. B. nachträglich Missbrauch oder Unregelmäßigkeiten aufzudecken.

Gemäß einer vorteilhaften Weiterbildung wird die zur Energieversorgung des Sensors und/oder Aktors nötige Energie zeitgleich mit einer Datenübertragung zur Empfangsvorrichtung oder einer bidirektionalen Datenkommunikation zwischen Sendevorrichtung und Empfangsvorrichtung übertragen. Alternativ kann die Energieübertragung durch die Empfangsvorrichtung in der Weise steuerbar sein, dass während einer Authentifikation zuerst nur eine für die Datenübertragung nötige Energie von der Sendevorrichtung zur Empfangsvorrichtung übertragen wird und erst anschließend zur Auslösung einer Aktion die hierfür nötige Energie von der Empfangsvorrichtung angefordert und von der Sendevorrichtung zur Empfangsvorrichtung übertragen wird.

Bei der ersten Alternative wird die Zeit der Authentifikation bereits für die Energieübertragung zur Versorgung des Aktors oder Sensors genutzt. Dadurch lässt sich insgesamt die Übertragungszeit verkürzen und somit auch die Reaktionszeit des Sensors und/oder Aktors verbessern.

Die andere Alternative zeigt zwar eine längere Reaktionszeit, da die Energie erst nach Gültigkeit der Authentifikation angefordert wird, die Energieausnutzung ist aber besser. Da für eine Aktion in der Regel ein wesentlich höherer Energiebedarf als für die reine Datenkommunikation besteht, wird diese Energie jedes Mal gespart, wenn die Authentifikation negativ ist. Insbesondere bei batteriebetriebenen Sendevorrichtungen führt dies zu einer Erhöhung der Einsatzdauer, wenn eine geringe Gültigkeitsrate bei der Authentifikation besteht.

Die Empfangsvorrichtung kann gesonderte temporäre Energiespeicher einerseits für den Aktor und andererseits für den Sensor, den Dekoder und/oder die Logik- oder Prozessorschaltung und/oder die Steuereinheit umfassen. Die getrennte Ausführung der Energiespeicher hat den Vorteil, dass Schaltungen, die weniger Energie verbrauchen, nur einen kleinen Energiespeicher benötigen und schneller in Betrieb gehen können, da die nötige Versorgungsspannung schneller erreicht ist. Außerdem wird ihr Betrieb auch dann nicht beeinflusst, wenn der Energiespeicher des Aktors durch Ausführung der Aktion entladen wurde.

Bei einer praktischen Ausgestaltung ist der Aktor als Schloss oder Öffner ausgebildet. Man kann eventuell auf diese Weise ein mechanisches Schloss einsparen oder aber die Sicherheit gegen Versagen des Schlosses bei Umwelteinflüssen, wie Verschmutzung oder Vereisung durch das zusätzliche elektronisch steuerbare Schloss verbessern.

Gemäß einer Verwendung bestehen Anwendungsmöglichkeiten zur Betätigung des Schlosses oder Öffners bei der Tür eines Fahrzeugs, eines Grundstückes, Gebäudes, Warencontainers oder dem Deckel einer Wertkassette, einem Wertstoff- oder Abfallsammelbehälters. Hierbei ist der Vorteil gegeben, dass ähnlich einem mechanischen Schloss keine eigene Energieversorgung nötig ist, dafür aber die Nachteile, wie Verschmutzung oder Beschädigung des Schlosses, Verlust von Schlüsseln beseitigt sind und eine erhöhte Sicherheit realisierbar ist, deren Grad sich je nach Sicherheitsrelevanz individuell steigern lässt.

Gemäß einer Weiterbildung kann die Vorrichtung zur generellen Überbrückung eines individuell kodierten Schlosses oder Öffners dienen.

Dies ist z.B. bei verschließbaren Wertstoffsammelbehältern gegeben, bei denen einzelne Benutzer den Sammelbehälter mittels gesonderter Schlüssel öffnen können, beim Abtransport auf einem Sammelfahrzeug diese aber generell geöffnet werden müssen. Es kann durch einen zusätzlich einstellbaren Kode, der von der am Sammelfahrzeug angebrachten Sendevorrichtung zusammen mit dem Energiesignal ausgestrahlt wird, und in der jeweiligen Empfangsvorrichtung mit einem gespeicherten Kode verglichen wird, noch zwischen unterschiedlichen Gattungen von Kleinbehältern unterschieden werden. So kann vermieden werden, dass Kleinbehälter für unterschiedliche Wertstoffe in denselben Sammelbehälter entleert werden.

Ein weiterer Anwendungsfall sind Geldkassetten, bei denen ebenfalls Benutzer individuelle Schlüssel erhalten, beim Geldinstitut aber aus Rationalisierungsgründen ein Generalschlüssel verwendet werden soll, der hier über eine elektrischen Aktor eine Generalschließfunktion ausübt.

Nachfolgend werden Ausführungsbeispiele der Erfindung anhand der Zeichnung erläutert.

In der Zeichnung zeigen:
- Fig. 1: eine Prinzipschaltung einer Vorrichtung zur drahtlosen Energieübertragung mit einer Sendevorrichtung und einer Empfangesvorrichtung,
- Fig. 2: ein erweitertes Blockschaltbild einer Sendervorrichtung und
- Fig. 3: ein erweitertes Blockschaltbild einer Empfangsvorrichtung.

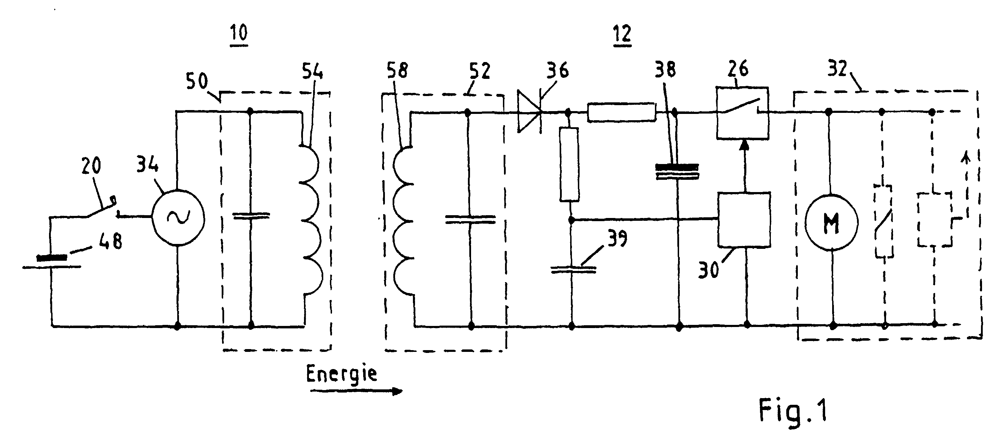

In Fig. 1 umfasst eine Sendevorrichtung 10 zur drahtlosen Energieübertragung einen Hochfrequenzgenerator, der als Energiesender 34 dient, sowie einen Schwingkreis 50, dessen Spule 54 gleichzeitig als Antenne dient. Die Sendevorrichtung 10 besitzt eine eigene Energiequelle 48, die mittels einer Steuereinheit 20, welche im einfachsten Fall ein Schalter oder Taster sein kann, mit dem Energiesender 34 verbunden werden kann. Benachbart zur Sendevorrichtung 10 befindet sich eine Empfangsvorrichtung 12, die einen auf dieselbe Frequenz abgestimmten Schwingkreis 52 umfasst, bei dem ebenfalls die Spule 58 als Antenne dient. Dem Schwingkreis 52 der Empfangsvorrichtung 12 sind ein Energieempfänger 36 in Form eines Gleichrichters sowie temporäre Energiespeicher 38, 39 in Form von Kondensatoren nachgeschaltet, die über Ladewiderstände aufladbar sind. Der eine größere Kondensator dient als Energiespeicher 38 für einen Aktor 32, während der kleinere Kondensator als Energiespeicher für eine elektronische Schaltung dient, die hier als Sensor 30 dargestellt ist.

Dieser Sensor 30 kann ein Spannungssensor mit Komparator und Referenz sein. Der Sensor 30 wirkt auf den Steuereingang einer Steuereinheit 26, die einen Schalttransistor oder einer Tyristor umfasst, und einen Aktor 32 mit dem temporären Energiespeicher 38 verbinden kann. Als Aktor 32 kann z.B. ein Elektromagnet oder ein Motor dienen. Durch die getrennte Ausführung der Energiespeicher 38; 39 für den Aktor 32 und für den Sensor 30 kann der Energiespeicher 39 für eine kleinere Kapazität bemessen und daher schneller aufladbar sein. Der Sensor 30 ist somit schneller betriebsbereit, als wenn er seine Versorgungsspannung aus dem gleichen Energiespeicher 38 beziehen würde, wie der Aktor 32. Außerdem ist die Betriebsspannung auch dann noch vorhanden, wenn bei Einschalten des Aktors 32 dessen Energiespeicher 38 vollständig entladen wird.

Demgegenüber ermöglicht die höhere Kapazität des Energiespeichers 38 für den Aktor 32, dass der Schaltstrom für einen Elektromagneten oder der Anlaufstrom für einen Motor aufgebracht werden kann, obwohl durch die drahtlose Energieübertragung eine solche Leistungsspitze nicht übertragbar wäre.

Der Energiesender 34 könnte auch gleichzeitig einen Datenkode aussenden, der von einem Dekoder der Empfangsvorrichtung ausgewertet und mit einem gespeicherten Kode verglichen wird. Der Aktor wird dann nur bei übereinstimmendem Kode ausgelöst.

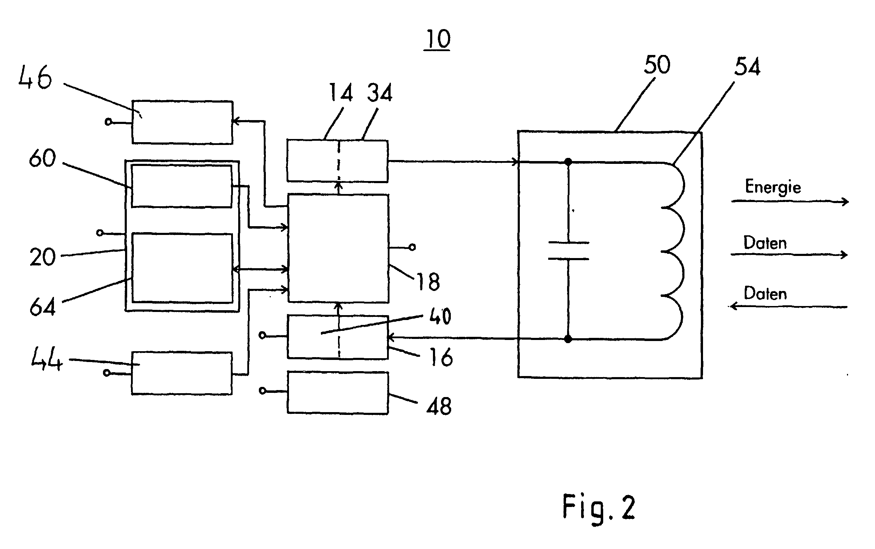

Fig. 2 zeigt ein erweitertes Blockschaltbild einer Sendervorrichtung. Die Sendevorrichtung 10 umfasst einen Hochfrequenzgenerator, der sowohl als Energiesender 34 als auch als Datensender 14 dient. Weiterhin ist ein Datenempfänger 16, ein Speicher 20, eine Tastatur 44, eine Anzeige 46, eine Steuereinheit 18, eine Energiequelle 48 und ein gleichzeitig zum Senden und Empfangen dienenden Schwingkreis 50 mit einer Spule 54 als Antenne vorgesehen. Über den Schwingkreis 50 werden Energie und Daten zur Empfangsvorrichtung 12 übertragen und von der Empfangsvorrichtung 12 stammende Daten empfangen.

Die Steuerung des Datensenders 14 und Datenempfängers 16 sowie des Speichers 20, der Anzeige 46 und der Tastatur 44 erfolgt durch die Steuereinheit 18. Der Steuereinheit 18 ist ferner ein Dekoder 40 zur Prüfung der Gültigkeit von empfangenen Daten zugeordnet. Der Speicher 20 ist unterteilt in einen wiederholt beschreibbaren Bereich 64 und einen nicht- oder einmalig beschreibbaren Bereich 60, in dem eine exklusive Identnummer der Sendevorrichtung 10 gespeichert ist.

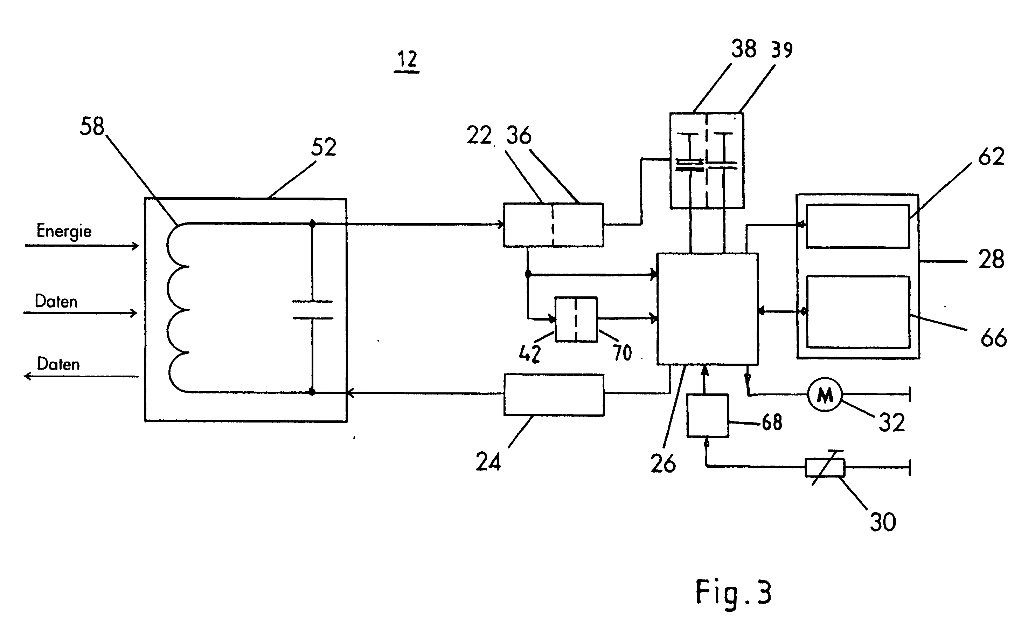

Fig. 3 zeigt ein erweitertes Blockschaltbild einer Empfangsvorrichtung. Die Empfangsvorrichtung 12 hat teilweise ähnliche Funktionsblöcke wie die vorbeschriebene Sendevorrichtung 10. So ist auch bei der Empfangsvorrichtung 12 ein Datensender 24, ein Datenempfänger 22, ein Speicher 28, eine Steuereinheit 26 und ein gleichzeitig zum Senden und Empfangen dienender Schwingkreis 52 vorhanden, dessen Spule 58 als Antenne dient. Außer dem Datenempfänger 22 ist ein Energieempfänger 36 vorhanden. Über den Schwingkreis 52 werden von der Sendevorrichtung 10 stammende Energie sowie Daten empfangen und Daten zur Sendevorrichtung 10 übertragen.

Ferner umfasst die Empfangsvorrichtung 12 einen Aktor 32 und einen Sensor 30. Der Aktor 32 wird von der Steuereinheit 26 gesteuert. Eine Steuerung des Aktors 32 kann ferngesteuert von der Sendevorrichtung 10 aus oder automatisch durch einen Sensor 32 erfolgen. Zur Auswertung von Fernsteuersignalen dient eine der Steuereinheit 26 zugeordnete Prozessorschaltung 70. Zur automatischen Steuerung durch Sensorsignale ist der Sensor 30 über eine Prozessorschaltung 68 zur Auswertung des Sensorsignals mit der Steuereinheit 26 verbunden.

Die Speicherung der drahtlos übertragenen Energie erfolgt in zwei Energiespeichern 38 und 39. Zur Energieversorgung des Aktors 32 dient der Energiespeicher 38 mit hoher Kapazität und zur Energieversorgung der übrigen Schaltungsteile dient der Energiespeicher 39 der wegen seiner niedrigen Kapazität schnell aufladbar ist und so auch die Betriebsbereitschaft der Empfangsvorrichtung 12 schnell herstellt.

Die Steuerung des Datensenders 24 und Datenempfängers 22 sowie des Speichers 28 erfolgt durch die Steuereinheit 26. Ferner ist der Steuereinheit 26 ein Dekoder 42 zur Prüfung der Gültigkeit von empfangenen Daten zugeordnet. Der Speicher 28 ist unterteilt in einen wiederholt beschreibbaren Bereich 66 und einen nicht- oder einmalig beschreibbaren Bereich 62, in dem eine exklusive Identnummer der Empfangsvorrichtung 12 gespeichert ist.

Zum Schutz vor Manipulationen mit nicht freigegebenen Sendevorrichtungen 12, die aber das benutzte Übertragungsprotokoll beherrschen, kann folgendermaßen verfahren werden.

Die exklusiven Identnummern der Sendevorrichtungen und Empfangsvorrichtungen, die in einem nichtbeschreibbaren oder nur einmalig beschreibbaren Speicherbereich 60; 62 abgelegt sind, dienen zur Festlegung, welche Sendevorrichtungen und Empfangsvorrichtungen als Partner zur gegenseitigen Kommunikation zugelassen sind. Dazu werden die Identnummern der zulässigen Partner im wiederbeschreibbaren Speicherbereich 64; 66 der anderen Partner abgelegt. Wenn die Sendevorrichtung 10 elektromagnetisch mit einer Empfangsvorrichtung 12 gekoppelt wird und die Funktionsblöcke der Empfangsvorrichtung 12 mit Energie versorgt werden und in Betrieb gehen, erfolgt zunächst ein Austausch von Authentifikationsdaten.

Bei einem besonders manipulationssicheren Verfahren übermitteln die Sendevorrichtung 10 und die Empfangsvorrichtung 12 einander Authentifikationsdaten, die durch einen Prüfalgorithmus verändert und rückübertragen werden. Da der Prüfalgorithmus beiden Geräten bekannt ist, kann so die Gültigkeit der Authentifikationsdaten überprüft werden, ohne dass es durch Abhören gelingt, die Authentifikationsdaten zu entschlüsseln. Die Authentifikationsdaten werden bei jeder neuen Übertragung geändert. Der Prüfalgorithmus kann durch die Identnummern beeinflußt werden. Erst wenn die miteinander gekoppelten Geräte die Gültigkeit der Authentifikationsdaten ermittelt haben, wird der Speicher 28 sowie der Aktor 32 und der Sensor 30 durch die Steuereinheit 26 der Empfangsvorrichtung 12 freigegeben.

Nachfolgend werden noch eine Reihe von Anwendungsmöglichkeiten für die Erfindung beispielhaft erläutert. Es gibt Wertstoffbehälter oder Restmüllbehälter, deren Deckel mittels eines Schlosses verriegelbar ist und nur vom befugten Benutzer zwecks Entsorgung seiner Abfälle geöffnet werden kann. Um bei der Entleerung der Behälter in einen Sammelbehälter eines Sammelfahrzeugs generell den Schließmechanismus aller Kleinbehälter in gleicher Weise überbrücken zu können, kann die erfindungsgemäße Vorrichtung eingebaut sein. Dabei wird die Energie zum Öffnen des Schlosses ähnlich dem Öffnen durch einen Generalschlüssel von einer Sendevorrichtung der Sammelfahrzeugs zu einer im Kleinbehälter integrierten Empfangsvorrichtung, die einen Aktor umfasst, übertragen. Der Aktor entriegelt dann den Schließmechanismus.

Entsprechend kann auch bei Geldkassetten verfahren werden, bei denen jeder Benutzer über einen individuellen Schlüssel verfügt, das Geldinstitut allerdings aus Rationalisierungsgründen ohne Schlüsselverwaltung in die Lage versetzt werden muss, generell alle Geldkassetten einfach und schnell öffnen zu können. Auch hier ist in die Geldkassette eine Empfangsvorrichtung mit einem Aktor integriert, der das reguläre Schloss überbrückt und entriegeln kann. Das Geldinstitut besitzt entsprechende Sendevorrichtungen, die die zum Aktivieren des Aktors und zu dessen Energieversorgung nötige Energie übertragen können.

Entsprechende Anwendungen sind auch bei Türen sowie Möbeltresoren, wie sie in Hotels verwendet werden, oder bei Koffern möglich. In jedem Fall kann die Empfangsvorrichtung ohne eigene Energiequelle auskommen. Sie muss also weder an das Stromnetz angeschaltet werden, noch ist ein regelmäßiger Austausch und eine Wartung einer sonst üblichen Batterie erforderlich.

Eine weitere Anwendungsmöglichkeit bietet sich z.B. für eine Reifendrucküberwachung im Reifen eines Fahrzeugs. Hier ist eine Energieversorgung vom Fahrzeugbordnetz nur unter sehr komplizierten Bedingungen möglich. Durch einen temporären Energiespeicher kann die Empfangsvorrichtung über längere Zeit über einen Sensor den Reifendruck feststellen und aktiviert bei Druckabfall einen Datensender, der einen Notruf zur Fahrzeugelektronik übermittelt. Ein entsprechender Notruf kann auch abgesetzt werden, kurz bevor die Energie des temporären Energiespeichers einen unteren Schwellwert unterschreitet und zu Ende geht. Es kann dann von Zeit zu Zeit der temporäre Energiespeicher nachgeladen werden.

## Patentansprüche

1. System zur drahtlosen Energieübertragung, welches eine Sendevorrichtung (10) mit einem Datensender (14) und einem Energiesender (34) sowie eine Empfangsvorrichtung (12) mit einem Datenempfänger (22), einem Energieempfänger (36), einem temporären, vom Energieempfänger (36) aufladbaren Energiespeicher (38) und einem Aktor (32) umfasst, wobei der Aktor ein eine mechanische Aktion ausführender Aktor (32) ist, **dadurch gekennzeichnet, dass** der Energie-speicher (38) einen Kondensator umfasst, an den der Aktor (32) angeschlossen ist, und dass die Kapazität des Energiespeichers (38) auf die Überbrückung von Verbrauchsspitzen des die mechanische Aktion ausführenden Aktors (32) bemessen ist.

2. Vorrichtung nach Anspruch 1, **dadurch gekennzeichnet, dass** die Auslösung der Aktion von der Sendevorrichtung (10) ferngesteuert ist.

3. Vorrichtung nach Anspruch 1, **dadurch gekennzeichnet, dass** die Auslösung der Aktion automatisch durch wenigstens einen Sensor (30) der Empfangsvorrichtung (12) gesteuert ist.

4. Vorrichtung nach Anspruch 1, **dadurch gekennzeichnet, dass** die Auslösung der Aktion nach Vergleich eines von der Sendevorrichtung (10) übertragenen Kodes mit einem in der Empfangsvorrichtung (12) gespeicherten Kode automatisch durch die Empfangsvorrichtung (12) gesteuert ist.

5. Vorrichtung nach Anspruch 1, **dadurch gekennzeichnet**,-dass die Auslösung der Aktion nach Authentifikation von zwischen der Sendevorrichtung (10) und der Empfangsvorrichtung (12) ausgetauschten Daten gesteuert ist.

6. Vorrichtung nach einem der Ansprüche 1 bis 5, **dadurch gekennzeichnet, dass** die Auslösung der Aktion nach Auswahl und Ansteuerung der zugeordneten Aktoren (32) gesteuert ist.

7. Vorrichtung nach einem der Ansprüche 1 bis 6, **dadurch gekennzeichnet, dass** der Sensor (30) der Empfangsvorrichtung (12) ein Frequenzdetektor und/oder ein Spannungswertdetektor für das von Sendevorrichtung (10) ausgestrahlte Energiesignal, ein Zeitdetektor oder ein Detektor für eine externe physikalische Größe ist und mittels einer Steuereinheit (26) den Aktor (32) steuert.

8. Vorrichtung nach Anspruch 7, **dadurch gekennzeichnet, dass** die Empfangsvorrichtung (12) eine Logik- oder Prozessorschaltung (68) zur Auswertung des Sensorsignals oder der Sensorsignale umfasst.

9. Vorrichtung nach einem der Ansprüche 1 bis 8, **dadurch gekennzeichnet, dass** die Empfangsvorrichtung (12) eine Logikoder Prozessorschaltung (70) zur Auswertung von Fernsteuersignalen der Sendevorrichtung (10) umfasst.

10. Vorrichtung nach einem der Ansprüche 1 bis 9, **dadurch gekennzeichnet, dass** die Empfangsvorrichtung (12) einen Dekoder (49) umfasst, welcher auf Anforderung der Steuereinheit (26) die Empfangsvorrichtung (12) von der Sendevorrichtung (10) gesendete Authentifikationsdaten auswertet und bei Gültigkeit der Authentifikationsdaten den Sensor (30) und/oder den Aktor (32) freigibt.

11. Vorrichtung nach einem der Ansprüche 1 bis 10, **dadurch gekennzeichnet, dass** die Empfangsvorrichtung (12) einen gesonderten Datensender (24) und die Sendevorrichtung (10) einen gesonderten Datenempfänger (16) zur bidirektionalen Kommunikation umfasst, dass sowohl in einem Speicher (20) der Sendevorrichtung (10) als auch in einem Speicher (28) der Empfangsvorrichtung (12) Authentifikationsdaten abgelegt sind, dass sowohl in der Sendevorrichtung (10) als auch in der Empfangsvorrichtung (12) Dekoder (40; 42) vorgesehen sind, mittels der die auf Anforderung gegenseitig übermittelten Authentifikationsdaten auf Gültigkeit überprüfbar sind und erst bei Gültigkeit beider Authentifikationsdaten der Sensor (30) und/oder der Aktor (32) freigebbar sind.

12. Vorrichtung nach Anspruch 10 oder 11, **dadurch gekennzeichnet, dass** Authentifikationsvorgänge in einem Speicher der Sendevorrichtung (10) und/oder der Empfangsvorrichtung (12) speicherbar sind.

13. Vorrichtung nach einem der Ansprüche 10 bis 12, **dadurch gekennzeichnet, dass** die zur Energieversorgung des Sensors (30) und/oder Aktors (32) nötige Energie zeitgleich mit einer Datenübertragung zur Empfangsvorrichtung (12) oder einer bidirektionalen Datenkommunikation zwischen Sendevorrichtung (10) und Empfangsvorrichtung (12) übertragbar ist oder dass die Energieübertragung durch die Empfangsvorrichtung (12) in der Weise steuerbar ist, dass während einer Authentifikation zuerst nur eine für die Datenübertragung nötige Energie von der Sendevorrichtung (10) zur Empfangsvorrichtung (12) übertragbar ist und erst anschließend zur Auslösung einer Aktion die hierfür nötige Energie von der Empfangsvorrichtung (12) anforderbar und von der Sendevorrichtung (10) zur Empfangsvorrichtung (12) übertragbar ist.

14. Vorrichtung nach einem der Ansprüche 1 bis 13, **dadurch gekennzeichnet, dass** die Empfangsvorrichtung (12) gesonderte temporäre Energiespeicher (38, 39) einerseits für den Aktor (32) und andererseits für den Sensor (30), den Dekoder (40) und/oder die Logik- oder Prozessorschaltung (64, 66) und/oder die Steuereinheit (26) umfasst.

15. Vorrichtung nach einem der Ansprüche 1 bis 14, **dadurch gekennzeichnet, dass** der Aktor (32) als Schloss oder Öffner ausgebildet ist.

16. Verwendung einer Vorrichtung mit den Merkmalen des Anspruchs 15, **dadurch gekennzeichnet, dass** sie zur Betätigung des Schlosses oder Öffners der Tür eines Fahrzeugs, Grundstückes, Gebäudes, Warenkontainers oder dem Deckel einer Wertkassette, eines Wertstoff- oder Abfallsammelbehälters dient.

17. Verwendung nach Anspruch 16, **dadurch gekennzeichnet, dass** die Vorrichtung zur Ausführung einer Generalschließfunktion bei einem individuell kodierten Schloss oder einem Öffner dient.

## Claims

1. System for wireless energy transmission, which comprises a transmitting device (10) with a data transmitter (14) and an energy transmitter (34), as well as a receiving device (12) with a data receiver (22), an energy receiver (36), a temporary energy storage device (38) chargeable by the energy receiver (36) and an actuator (32), said actuator (32) performing a mechanical action, **characterized in that** the energy storage device (38) comprises a capacitor to which the actuator (32) is connected and that the capacity of the energy storage device (38) is dimensioned for bridging consumption peaks of the actuator (32) performing the mechanical action.

2. Device according to claim 1, **characterized in that** the initiation of the action is remotely controlled by the transmitting device (10).

3. Device according to claim 1, **characterized in that** the initiation of the action is automatically controlled by at least one sensor (30) of the receiving device (12).

4. Device according to claim 1, **characterized in that** the initiation of the action is automatically controlled by the receiving device (12) after comparing a code transmitted by the transmitting device (10) and a code stored in the receiving device (12).

5. Device according to claim 1, **characterized in that** the initiation of the action is controlled after authentication of data exchanged between the transmitting device (10) and the receiving device (12).

6. Device according to one of the claims 1 to 5, **characterized in that** the initiation of the action is controlled following the selection and control of the associated actuators (32).

7. Device according to one of the claims 1 to 6, **characterized in that** the sensor (30) of the receiving device (12) is a frequency detector and/or a voltage value detector for the energy signal emitted by the transmitting device (10), a time detector or a detector for an external physical quantity and controls the actuator (32) by means of a control unit (26).

8. Device according to claim 7, **characterized in that** the receiving device (12) comprises a logic or processor circuit (68) for evaluating the sensor signal or signals.

9. Device according to one of the claims 1 to 8, **characterized in that** the receiving device (12) comprises a logic or processor circuit (70) for evaluating remote control signals of the transmitting device (10).

10. Device according to one of the claims 1 to 9, **characterized in that** the receiving device (12) comprises a decoder (49), which when requested by the control unit (26) evaluates authentication data transmitted by the transmitting device (10) and if the authentication data are valid releases the sensor (30) and/or the actuator (32).

11. Device according to one of the claims 1 to 10, **characterized in that** the receiving device (12) comprises a separate data transmitter (24) and the transmitting device (10) a separate data receiver (16) for bidirectional communication, that both in a memory (20) of the transmitting device (10) and in a memory (28) of the receiving device (12) are filed authentication data, that both in the transmitting device (10) and in the receiving device (12) decoders (40, 42) are provided by means of which the requested mutually transferred authentication data can be checked for validity and only in the case of validity of both authentication data are the sensor (30) and/or actuator (32) released.

12. Device according to claim 10 or 11, **characterized in that** authentication processes can be stored in a memory of the transmitting device (10) and/or the receiving device (12).

13. Device according to one of the claims 10 to 12, **characterized in that** the energy required for the energy supply of the sensor (30) and/or the actuator (32) can be transmitted at the same time as a data transmission to the receiving device (12) or a bidirectional data communication between transmitting device (10) and receiving device (12) or that the energy transmission is controllable through the receiving device (12) in such a way that during an authentication firstly only energy necessary for data transmission can be transmitted from the transmitting device (10) to the receiving device (12) and only subsequently for the initiation of an action can the necessary energy be requested by the receiving device (12) and transmitted from the transmitting device (10) to said receiving device (12).

14. Device according to one of the claims 1 to 13, **characterized in that** the receiving device (12) comprises separate temporary energy storage devices (28, 39) on the one hand for the actuator (32) and on the other for the sensor (30), decoder (40) and/or logic or processor circuit (64, 66) and/or control unit (26).

15. Device according to one of the claims 1 to 14, **characterized in that** the actuator (32) is constructed as a lock or opener.

16. Use of a device having the features of claim 15, **characterized in that** it is used for operating the lock or opener of the door of a vehicle, premises, building, goods container or the lid of a cashbox, valuable product or waste collection container.

17. Use according to claim 16, **characterized in that** the device is used for performing a general locking function in the case of an individually coded lock or opener.

## Revendications

1. Système de transmission d'énergie sans fil, qui comprend un dispositif émetteur (10) avec un émetteur de données (14) et un émetteur d'énergie (34), ainsi qu'un dispositif récepteur (12) avec un récepteur de données (22), un récepteur d'énergie (36), un réservoir d'énergie temporaire (38) pouvant être chargé par le récepteur d'énergie (36), et un acteur (32), celui-ci étant un acteur qui exécute une action mécanique, **caractérisé en ce que** le réservoir d'énergie (38) comprend un condensateur auquel l'acteur (32) est raccordé, et **en ce que** la capacité du réservoir d'énergie (38) est dimensionnée de façon à surmonter les pointes de consommation de l'acteur (32) exécutant l'action mécanique.

2. Dispositif selon la revendication 1, **caractérisé en ce que** le déclenchement de l'action est téléguidé par le dispositif émetteur (10).

3. Dispositif selon la revendication 1, **caractérisé en ce que** le déclenchement de l'action est commandé automatiquement par au moins un détecteur (30) du dispositif récepteur (12).

4. Dispositif selon la revendication 1, **caractérisé en ce que** le déclenchement de l'action est commandé automatiquement par le dispositif récepteur, après comparaison d'un code transmis par le dispositif émetteur (10) avec un code mémorisé dans le dispositif récepteur (12).

5. Dispositif selon la revendication 1, **caractérisé en ce que** le déclenchement de l'action est commandé après authentification de données échangées entre le dispositif émetteur (10) et le dispositif récepteur (12).

6. Dispositif selon l'une des revendications 1 à 5, **caractérisé en ce que** le déclenchement de l'action est commandé après sélection et excitation des acteurs correspondants (32).

7. Dispositif selon l'une des revendications 1 à 5, **caractérisé en ce que** le détecteur (30) du dispositif récepteur (12) est un détecteur de fréquence et/ou un détecteur de valeurs voltmétriques pour le signal d'énergie émis par le dispositif émetteur (10), un détecteur de temps ou un détecteur d'une grandeur physique externe, et qu'il commande l'acteur (32) au moyen d'une unité de commande (26).

8. Dispositif selon la revendication 7, **caractérisé en ce que** le dispositif récepteur (12) comprend un circuit logique ou un circuit de processeur (68) pour évaluer le signal ou les signaux du détecteur.

9. Dispositif selon l'une des revendications 1 à 8, **caractérisé en ce que** le dispositif récepteur (12) comprend un circuit logique ou un circuit de processeur (70) pour l'évaluation de signaux de télécommande du dispositif émetteur (10).

10. Dispositif selon l'une des revendications 1 à 9, **caractérisé en ce que** le dispositif récepteur (12) comprend un décodeur (49) qui évalue les données d'authentification envoyées au dispositif récepteur (12) par le dispositif émetteur (10) sur demande de l'unité de commande (26), et qui libère le détecteur (30) et/ou l'acteur (32) en cas de validité des données d'authentification.

11. Dispositif selon l'une des revendications 1 à 10, **caractérisé en ce que** le dispositif récepteur (12) comprend un émetteur de données (24) séparé et **en ce que** le dispositif émetteur (10) comprend un récepteur de données (16) séparé pour la communication bidirectionnelle, que des données d'authentification sont déposées dans une mémoire (20) du dispositif émetteur (10) et dans une mémoire (28) du dispositif récepteur (12), que des décodeurs (40, 42) sont prévus aussi bien dans le dispositif émetteur (10) que dans le dispositif récepteur (12), au moyen desquels il est possible de vérifier la validité des données d'authentification transmises réciproquement sur demande et que le détecteur (30) et/ou l'acteur (32) peuvent être libérés seulement en cas de validité des deux données d'authentification.

12. Dispositif selon la revendication 10 ou 11, **caractérisé en ce que** des processus d'authentification peuvent être mémorisés dans une mémoire du dispositif émetteur (10) et/ou du dispositif récepteur (12).

13. Dispositif selon l'une des revendications 10 à 12, **caractérisé en ce que** l'énergie nécessaire à l'alimentation en énergie du détecteur (30) et/ou de l'acteur (32) est transmissible simultanément avec une transmission de données au dispositif récepteur (12) ou avec une communication de données bidirectionnelle entre le dispositif émetteur (10) et le dispositif récepteur (12), ou que la transmission d'énergie par le dispositif récepteur (12) peut être commandée de façon qu'au cours d'une authentification, soit transmissible uniquement l'énergie nécessaire à une transmission de données du dispositif émetteur (10) au dispositif récepteur (12), et qu'ensuite, l'énergie nécessaire au déclenchement d'une action puisse être demandée par le dispositif récepteur (12) et transmise au dispositif récepteur (12).

14. Dispositif selon l'une des revendications 1 à 13, **caractérisé en ce que** le dispositif récepteur (12) comprend des réservoirs d'énergie temporaires (38, 39) séparés, d'une part pour l'acteur (32), et d'autre part pour le détecteur (30), le décodeur (40) et/ou le circuit logique ou le circuit de processeur (64, 66) et/ou l'unité de commande (26).

15. Dispositif selon l'une des revendications 1 à 14, **caractérisé en ce que** l'acteur (32) est conçu comme serrure ou bouton-poussoir.

16. Utilisation d'un dispositif présentant les caractéristiques de la revendication 15, **caractérisée en ce qu**'il sert à l'actionnement de la serrure oü bouton-poussoir de la porte d'un véhicule, d'un immeuble, d'un bâtiment, d'un conteneur de marchandises ou d'un couvercle de cassette de conservation d'argent et d'objets de valeur, d'un conteneur de matières de valeur ou de collecte de déchets.

17. Utilisation selon la revendication 16, **caractérisée en ce que** le dispositif sert à l'exécution d'une fonction de fermeture générale dans le cas d'une serrure ou d'un bouton-poussoir à codage individuel.
